# EUROPÄISCHE PATENTSCHRIFT

(11) **EP 2 820 262 B1**
(45) Veröffentlichungstag und Bekanntmachung des Hinweises auf die Patenterteilung: **08.06.2016**
(21) Anmeldenummer: 13700387.7
(22) Anmeldetag: 15.01.2013
(51) Int. Cl.: F01N 3/22, F01N 3/30

(54) **VERBRENNUNGSKRAFTMASCHINE**
INTERNAL COMBUSTION ENGINE
MOTEUR À COMBUSTION INTERNE

(30) Priorität: 02.03.2012 DE 102012101767
(43) Veröffentlichungstag der Anmeldung: 07.01.2015
(73) Patentinhaber: Pierburg GmbH, 41460 Neuss (DE)
(72) Erfinder: ROTHGANG, Stefan, 47495 Rheinberg (DE); GENSTER, Albert, 45768 Marl (DE)
(74) Vertreter: Patentanwälte ter Smitten Eberlein Rütten Partnerschaftsgesellschaft
(86) Internationale Anmeldenummer: PCT/EP2013/050624
(87) Internationale Veröffentlichungsnummer: WO 2013/127556

(56) Entgegenhaltungen:
- EP-A2- 1 865 169
- DE-A1-102007 057 603
- DE-C- 725 763
- FR-A1- 2 928 176
- JP-A- 2006 233 803
- US-A1- 2006 096 281

## Beschreibung

Die Erfindung betrifft eine Verbrennungskraftmaschine mit einem Motorblock, einer Luftansaugleitung, die von einem Lufteinlass zum Motorblock führt, einer Abgasleitung, die vom Motorblock zu einem Abgasauslass führt, einem Abgasturbolader, dessen Verdichter in der Luftansaugleitung angeordnet ist und dessen Turbine in der Abgasleitung angeordnet ist, einer Schubumluftleitung, in der ein Schubumluftventil angeordnet ist, einer ersten Verbindungsleitung, über welche ein Auslass des Verdichters mit der Abgasleitung verbunden ist, einem Luftregelventil, welches in der Verbindungsleitung angeordnet ist und einem Oxidationskatalysator und einem Partikelfilter, die in der Abgasleitung angeordnet sind.

Derartige Verbrennungskraftmaschinen werden beispielsweise als Dieselmotoren in Kraftfahrzeugen verwendet. Moderne Dieselmotoren weisen einen Abgasturbolader auf, dessen Kompressor zur Verhinderung des sogenannten Verdichterpumpens mittels eines Schubumluftventils bereits verdichtete Luft über einen Bypass vom Austritt des Verdichters zum Eintritt wieder zugeführt werden kann. Diese Schubumluftventile sind üblicherweise pneumatisch oder elektromagnetisch geschaltete Ventile.

Zusätzlich sind Dieselmotoren bekannt geworden, bei denen eine Verbindungsleitung vom Austritt des Verdichters hinter den Austritt der Turbine in die Abgasleitung führt. In dieser Verbindungsleitung wird ein Steuerventil angeordnet, welches dazu dient, den in die Abgasleitung geführten Luftstrom zu regeln. Hierdurch können Abgastemperatur und Sauerstoffbeladung im Abgas geregelt werden. Des Weiteren kann eine zu starke Aufladung bei hoher Motorlast entsprechend der Funktion eines Schubumluftventils verhindert werden.

Ein entsprechend ausgeführter Dieselmotor wird in der DE 101 12 521 B4 offenbart. Die Verbindungsleitung zwischen Turbinenaustritt und Kompressoraustritt mündet hier vor der Mündung einer die Turbine umgehenden Bypassleitung in die Abgasleitung und somit stromaufwärts der Abgasnachbehandlungseinrichtungen, bestehend aus Oxidationskatalysator NOₓ-Katalysator und Dieselpartikelfilter. Des Weiteren sind im Abgasstrang Sensoren zur Abgastemperaturmessung und Sauerstoffkonzentrationsmessung angeordnet.

Eine ähnliche Anordnung ist aus der DE 603 14 611 T2 bekannt. Allerdings enthält dieser Motor neben der Verbindungsleitung zusätzlich eine Schubumluftleitung mit einem Schubumluftventil, jedoch keine Waste-Gate-Leitung. Die Verbindungsleitung mündet stromabwärts eines NOₓ-Katalysators und stromaufwärts eines Dieselpartikelfilters mit Oxidationskatalysator in die Abgasleitung. Zur Regeneration des NOₓ-Katalysators wird der Motor im fetten Zustand betrieben, wodurch zwar unverbranntes HC und CO ausgestoßen werden, jedoch die niedrige Sauerstoffkonzentration eine sekundäre Schwefelvergiftung verhindert. Gleichzeitig erhöht sich die Abgastemperatur. Zu diesem Zeitpunkt wird über die Verbindungsleitung Luft vor dem Dieselpartikelfilter mit Katalysator zugeführt, wodurch das HC und das CO oxidiert werden. Durch diese Oxidation steigt die Temperatur, wodurch wiederum eine Regeneration des Partikelfilters stattfindet. Zur Steigerung der Abgastemperatur muss bei Schwachlast die Drosselklappe angestellt werden, wodurch der Saugrohrdruck und Luftmasse reduziert werden. So entsteht eine Anfettung immer in Abhängigkeit des Ladedrucks.

Ein weiterer derartiger Verbrennungsmotor wird in der EP 1 865 169 A2 offenbart. Hier mündet die Verbindungleitung zwischen einem Drei-Wege-Katalysator und einem Partikelfilter. Die Einleitung der Luft dient dabei zur Erhöhung der Abgastemperatur zur Regeneration des Partikelfilters.

Zusätzlich ist aus der JP 2006-233803 ein Verbrennungsmotor bekannt, bei dem in der Auslassleitung des Verdichters des Turboladers ein Schaltventil angeordnet ist, über welches wahlweise die verdichtete Luft entweder vor einen Katalysator oder zurück zum Einlass des Verdichters geleitet werden kann. Eine Mengenregelung wird ebenso wenig offenbart wie die Anordnung des Ventils in der Auslassleitung.

Des Weiteren wird in der FR 2 928 176 ein Verbrennungsmotor offenbart, bei dem in einer von der Auslassleitung des Kompressors eines Turboladers ein erstes Ventil angeordnet ist, über welches die Abzweigleitung geöffnet oder geschlossen werden kann. Hinter diesem Ventil ist ein Verzweigungsraum angeordnet, von dem drei Leitungen abzweigen. Eine dieser Leitungen dient als Schubumluftleitung, in der ein weiteres Ventil angeordnet ist. Die zweite und dritte Leitung führen an unterschiedliche Positionen im Bereich des Auslasskanals der Verbrennungskraftmaschine. In jeder dieser Leitungen ist ein zusätzliches Ventil angeordnet. Alle vier Ventile weisen einen eigenen Aktor auf, über den sie betätigt werden. Die Regelung erfolgt über eine gemeinsame Steuereinheit, über die die vier Aktoren zur Betätigung angesteuert werden.

Entsprechend bestehen bei den bekannten Ausführungen die Nachteile, dass zur Steuerung der Betriebszustände in Schwachlast, Volllast und zur Regeneration ein hoher Bauteilaufwand bezüglich der notwendigen Regelventile besteht. Des Weiteren werden durch die Anordnung der Lufteinleitung hinter den Katalysatoren lange Verbindungsleitungen benötigt, deren Montage aufwendig ist. Eine Abgastemperaturerhöhung ist durch die Anfettung des Motors im Rahmen der Luftabführung gegeben. Zur weiteren Steigerung der Abgastemperatur am Eingang des Partikelfilters sowie zur Sicherstellung der grundsätzlichen Funktion des Oxidationskatalysators und des Partikelfilters ist die Einregelung einer gewünschten Sauerstoffkonzentration jedoch zwingend erforderlich.

Es stellt sich daher die Aufgabe, eine Verbrennungskraftmaschine bereitzustellen, welche einen geringen Bauteileaufwand bei guter Regelbarkeit aufweist. So sollen für alle Last- und Regenerationszustände optimierte Sauerstoffkonzentrationen und Abgastemperaturen einstellbar sein.

Diese Aufgabe wird durch eine Verbrennungskraftmaschine mit den Merkmalen des Hauptanspruchs gelöst.

Dadurch, dass das Luftregelventil und das Schubumluftventil über einen gemeinsamen Aktor regelbar sind, verringert sich der Bauteileaufwand. Eine vollständige gute Regelbarkeit bleibt dennoch erhalten. Eine standardisierte Abgasdrossel am Dieselmotor kann grundsätzlich entfallen, da das Spülgefälle als auch die Ansaugluftmasse über das Luftregelventil beeinflussbar sind.

Vorzugsweise zweigt die erste Verbindungsleitung von der Schubumluftleitung ab. So wird die Länge der notwendigen Rohrleitungen verkürzt. Des Weiteren wird die Lage der beiden Ventile mit gemeinsamem Aktor im Motorraum flexibler.

In einer vorteilhaften Ausführungsform mündet die erste Verbindungsleitung stromaufwärts des Partikelfilters in die Abgasleitung. So kann zur Regenerierung des Partikelfilters die benötigte Sa uerstoffkonzentration auch in Fällen zur Anhebung der Abgastemperaturen eines fett laufenden Motors und der daraus resultierenden geringen Rohabgassauerstoffkonzentration frei eingestellt werden.

Weiterhin ist es vorteilhaft, wenn die erste Verbindungsleitung stromaufwärts des Oxidationskatalysators in die Abgasleitung mündet. So kann zur Umwandlung von HC und CO ebenfalls die Temperatur beispielsweise durch Nacheinspritzung in die sauerstoffreiche Umgebung deutlich erhöht werden, wodurch die korrekte Funktionsweise des Oxidationskatalysators sichergestellt wird.

Damit eine korrekte Regelung der Abgastemperatur, der Sauerstoffkonzentration im Abgas sowie des Ladedrucks möglich wird, ist in der ersten Verbindungsleitung ein Massenstromsensor angeordnet. Aufgrund der nicht vorhandenen Abgasbelastung kann hier ein einfacher Luftmassensensor verwendet werden.

Vorzugsweise zweigt von der ersten Verbindungsleitung eine zweite Verbindungsleitung ab, die stromabwärts des Dieselpartikelfilters in die Abgasleitung mündet. Diese sollte insbesondere beim Kaltstart der Verbrennungskraftmaschine durchströmt werden, da dies zu einer Reduzierung der Aufheizzeit des Katalysators führen würde, der dann nicht mehr von relativ kalter Luft durchströmt würde. Gleichzeitig wird durch die geringere zum Motorblock geförderte Luftmenge das Spülgefälle bei der Abgasrückführung im Hochdruckstrang erhöht, was erhöhte Rückführraten mit geringerer Aufwärmzeit zur Folge hat.

Zur einfachen Umsetzung der Regelung mit zwei Verbindungsleitungen von der Luftansaugleitung zur Abgasleitung ist in der Abzweigung der zweiten Verbindungsleitung eine Umschaltklappe angeordnet, über die wahlweise die erste oder die zweite Verbindungsleitung verschließbar ist. Ähnlich wie ein Abgaskühler kann so nach der Warmlaufphase die Bypassklappe umgeschaltet werden, um anschließend die Luft zur Regeneration vor den Katalysator und den Partikelfilter zu fördern.

In einer bevorzugten Ausführung zweigt die Schubumluftleitung vor einem Ladeluftkühler von der Luftansaugleitung ab, so dass ungekühlte Luft zur Erhöhung der Temperaturen am Katalysator und am Partikelfilter in die Abgasleitung gefördert wird.

Ein besonders einfacher Aufbau des kombinierten Ventils ergibt sich, wenn das Schubumluftventil mit dem Luftregelventil als 3/2-Wegeventil ausgebildet ist. So wird die Montage vereinfacht. Eine vollständige Vormontage der beiden Ventile mit Verzweigung und Aktor wird ermöglicht.

In einer besonders einfachen Ausführungsform ist das Schubumluftventil bei geschlossenem Luftregelventil regelbar und das Luftregelventil bei geschlossenem Schubumluftventil regelbar. Ein derartiges Ventil lässt sich mit einem einfachen Freilauf für beide Ventile kostengünstig realisieren. So wird eine unabhängige Regelbarkeit der Durchströmungsquerschnitte der Verbindungsleitung und der Schubumluftleitung verwirklicht.

Ein besonders kostengünstiger und langlebiger Aufbau des kombinierten Ventils ergibt sich, wenn das Schubumluftventil und das Luftregelventil als Klappenventile ausgeführt sind, die eine gemeinsame Drehachse aufweisen.

In einer besonders bevorzugten weiterführenden Ausführungsform erfolgt die Regelung des Schubumluftventils und des Luftregelventils über einen elektrischen Aktor mit nachfolgendem Getriebe, wobei das Getriebe eine Kulisse aufweist, in die ein erster mit dem Schubumluftventil zur Betätigung gekoppelter Bolzen greift und ein zweiter mit dem Luftregelventil zur Betätigung gekoppelter Bolzen greift, wobei in einer Mittelstellung der Kulisse die beiden Bolzen gegen die entgegengesetzten Enden der Kulisse anliegen und das Schubumluftventil die Schubumluftleitung und das Luftregelventil die Verbindungsleitung verschließen.

Es wird somit eine Verbrennungskraftmaschine geschaffen, mit der eine zuverlässige Regeneration des Partikelfilters und des Katalysators bei reduziertem Bauteileaufwand durchgeführt werden kann und gleichzeitig unabhängig von den Regenerationsphasen eine Ladedruckregelung und Luftmassenregelung durchgeführt werden kann. Eine Abgasklappe kann ebenso entfallen wie ein zweiter Aktor für die Ventile. Die Rohrleitungslängen werden reduziert.

Ein Ausführungsbeispiel einer erfindungsgemäßen Verbrennungskraftmaschine ist in den Figuren dargestellt und wird nachfolgend beschrieben.

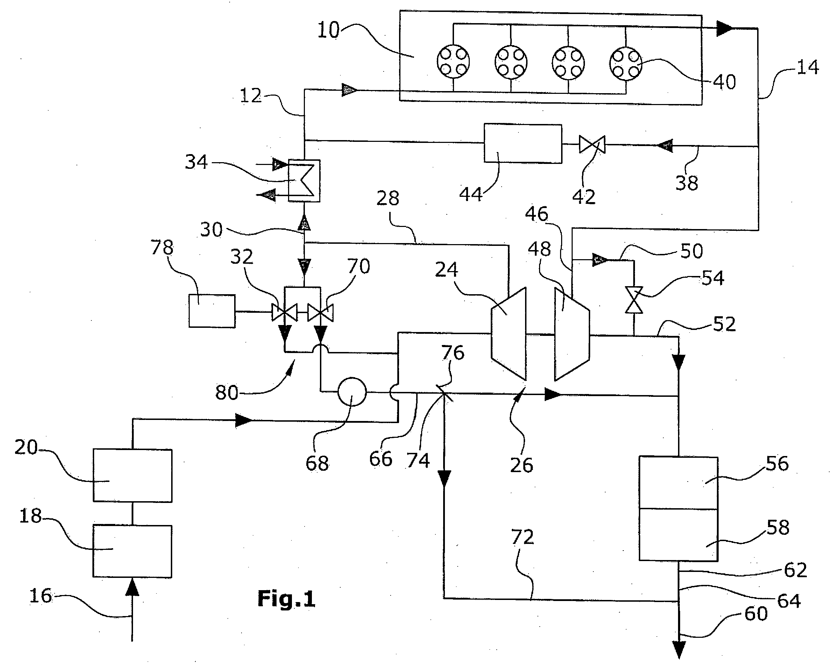

Figur 1 zeigt eine schematische Darstellung einer erfindungsgemäßen Verbrennungskraftmaschine als Schaltbild.
Figur 2 zeigt schematisch eine Anordnung eines Aktors zum Antrieb eines Luftregelventils und eines Schubumluftventils für die in Figur 1 dargestellte Verbrennungskraftmaschine

Die erfindungsgemäße Verbrennungskraftmaschine ist im vorliegenden Ausführungsbeispiel ein 4-Zylinder Reihen-Dieselmotor, der einen Motorblock 10 aufweist, der über eine Luftansaugleitung 12 mit Frischluft versorgt wird und dessen Abgas über eine Abgasleitung 14 abgeführt werden kann.

In der Luftansaugleitung 12 sind stromabwärts zu einem Lufteinlass 16 ein Luftfilter 18 sowie ein Luftmassenmesser 20 zur Bestimmung der angesaugten Luftmasse angeordnet. Die Luftansaugleitung führt zu einem Einlass 22 eines Verdichters 24 eines Abgasturboladers 26. Hinter einem Auslass 28 des Verdichters 24 zweigt eine Schubumluftleitung 30 ab, über welche der Auslass 28 des Verdichters 24 mit seinem Einlass 22 fluidisch verbunden ist. Zur Regelung der rezirkulierten Luftmasse ist in der Schubumluftleitung 30 ein Schubumluftventil 32 angeordnet. Stromabwärts der Verzweigung, an der die Schubumluftleitung 30 abzweigt, ist in der Luftansaugleitung 12 ein Ladeluftkühler 34 ausgebildet, hinter dem in die Luftansaugleitung eine Hochdruckabgasrückführleitung 38 mündet. Im Folgenden gelangt das Gasgemisch über die Luftansaugleitung 12 in den Motorblock 10 zur Versorgung der Zylinder 40 des Motorblocks 10 mit Frischluft und gegebenenfalls zurückgeführtem Abgas.

Aus den Zylindern 40 ausgestoßenes Abgas verlässt über die Abgasleitung 14 den Motorblock 10. Von der Abgasleitung 14 zweigt die Hochdruckabgasrückführleitung 38, in der ein Abgasrückführventil 42 und ein Abgaskühler 44 angeordnet sind, ab, bevor die Abgasleitung 14 in einen Einlass 46 einer mit dem Verdichter 24 gekoppelten Turbine 48 des Abgasturboladers 26 mündet. Vor dem Einlass 46 zweigt eine Bypassleitung 50 ab, über welche die Turbine 48 umgehbar ist. Die Regelung der über die Bypassleitung 50 geführten Abgasmenge, die stromabwärts eines Turbinenauslasses 52 wieder der Abgasleitung 14 zugeführt wird, erfolgt über ein in der Bypassleitung 50 angeordnetes Waste-Gate-Ventil 54. Hinter der Verzweigung der Abgasleitung 14 mit der Mündung der Bypassleitung 50 sind in der Abgasleitung 14 ein Oxidationskatalysator 56 und ein Dieselpartikelfilter 58 zur Abgasnachbehandlung angeordnet. Die Abgasleitung 14 endet am Abgasauslass 60. Eine Steuerung der Führungsgrößen Sauerstoffkonzentration und Abgastemperatur zur Bestimmung von Regenerationszeitpunkten erfolgt mittels eines Temperatursensors 62 und eines Sauerstoffsensors 64, die unmittelbar vor dem Katalysator 56 angeordnet werden.

Zusätzlich ist eine erste Verbindungsleitung 66 in der Verbrennungskraftmaschine vorgesehen, über welche der Auslass 28 des Verdichters 24, im vorliegenden Fall über die Schubumluftleitung 30 mit der Abgasleitung 14 verbunden ist, wobei die Mündung der Verbindungsleitung 66 stromaufwärtig zum Katalysator 56 und zum Dieselpartikelfilter 58 sowie zum Sauerstoffsensor 64 und zum Temperatursensor 62 angeordnet ist. In dieser Verbindungsleitung 66 ist ein Massenstromsensor 68 zur Steuerung der Luftmasse ausgebildet, die über ein Luftregelventil 70 geregelt wird, welches in der Verbindungsleitung 66 angeordnet ist.

Von der ersten Verbindungsleitung 66 zweigt eine zweite Verbindungsleitung 72 ab, die stromabwärts des Dieselpartikelfilters 58 in die Abgasleitung 14 mündet. In der Abzweigung 74 der zweiten Verbindungsleitung 72 von der ersten Verbindungsleitung 66 ist eine Umschaltklappe 76 angeordnet, so dass entweder die erste oder die zweite Verbindungsleitung 66, 72 durchströmt wird.

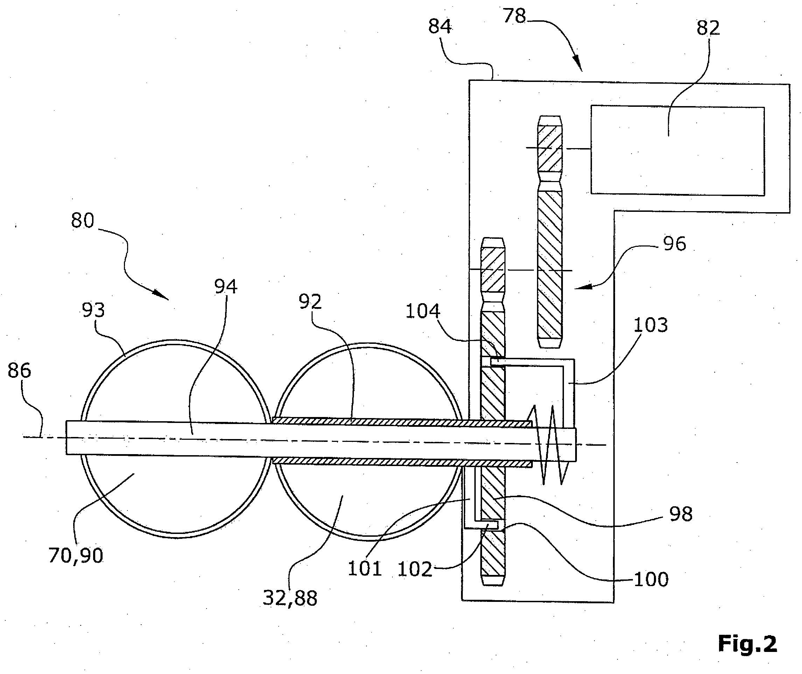

Erfindungsgemäß wird das Luftregelventil 70 und das Schubumluftventil 32 mittels eines gemeinsamen Aktors 78 betätigt. Eine mögliche Ausführung eines derartigen kombinierten 3/2-Wegeventils 80, welches die Funktionen des Schubumluftventils 32 und des Luftregelventils 70 vereint, ist in der Figur 2 dargestellt.

Der Aktor 78 dieses Ventils 80 besteht aus einem Elektromotor 82 mit anschließendem Stirnradgetriebe 96, die in einem Gehäuse 84 angeordnet sind. Das Ventil 80 weist eine Drehachse 86 auf, um die sich ein erster Klappenkörper 88, der einen Ventilkörper des Schubumluftventils 32 bildet, und ein zweiter Klappenkörper 90 dreht, der einen Ventilkörper des Luftregelventils 70 bildet. Der erste Klappenkörper 88 ist auf einer Hohlwelle 92 drehfest angeordnet, die die Schubumluftleitung 30 durchdringt und in einem Kanal bildenden Gehäuse 93 gelagert ist und der zweite Klappenkörper 90 ist auf einer in der Hohlwelle 92 geführten Welle 94 angeordnet, die die Verbindungsleitung 66 durchdringt.

Der Elektromotor 82 treibt ein Stirnradgetriebe 96 an, dessen Abtriebsglied durch eine Scheibe 98 gebildet ist, in der eine Kulisse 100 ausgebildet ist und deren Drehachse mit der Drehachse 86 der Wellen 92, 94 zusammenfällt. Die Kulisse 100 erstreckt sich über den halben Umfang der Scheibe 98, wobei der Mittelpunkt der Kulisse erneut durch die Drehachse 86 festgelegt ist. Mit der Hohlwelle 92 ist drehfest über einen Hebel 101 ein erster Bolzen 102 verbunden, der in die Kulisse 100 greift und gegen ein erstes Ende der Kulisse 100 vorgespannt anliegt. Der Klappenkörper 88 liegt in dieser Position ebenfalls über ein Federelement vorgespannt gegen einen Gehäuseanschlag an. Am entgegengesetzten Ende der Kulisse 100 liegt ein zweiter mit der Welle 94 über einen Hebel 103 gekoppelter Bolzen 104 vorgespannt gegen einen Gehäuseanschlag an. Bei Betätigung des Aktors 78 wird je nach Drehrichtung einer der Bolzen 102, 104 und damit der mit ihm gekoppelte Klappenkörper 88, 90 durch das jeweilige Ende der Kulisse 100 entgegen der Federkraft mitgenommen, während der andere Bolzen 104, 102 in der Kulisse 100 gleitet, da er über die Feder gegen den Anschlag gedrückt wird, und entsprechend der Klappenkörper 90, 88 in seiner Position gehalten wird.

Bei Richtungsumkehr wird zunächst der zuvor betätigte Klappenkörper 88 durch die Federkraft in seine vorherige Position bis zum Anschlag zurückgedreht, während der andere stillsteht. Sobald die Ausgangposition überschritten wird, wird darauf folgend der andere Klappenkörper 90, 88 über den zweiten Bolzen 104 durch das nunmehr greifende entgegengesetzte Ende der Kulisse 100 in entgegengesetzter Richtung gedreht, während der andere Bolzen 102 in der Kulisse 100 gleitet. Entsprechend kann wahlweise der Luftstrom in der Schubumluftleitung 30 oder in der ersten Verbindungsleitung 66 beziehungsweise je nach Stellung der Umschaltklappe 76 in der zweiten Verbindungsleitung 72 vollständig geregelt werden.

Bei Betrieb der Verbrennungskraftmaschine kann nun zur Vermeidung eines Verdichterpumpens beispielsweise aufgrund dynamischer Veränderungen der Schluckkennlinie des Motors beispielsweise wegen Schaltprozessen im Automatikprozess, über die Schubumluftleitung 30 eine gezielte Abregelung der Luftmasse sowie eine Kennfeldverschiebung des Abgasturboladers 26 durchgeführt werden, indem das Schubumluftventil 32 geöffnet wird. Bei Verschluss des Schubumluftventils 32 und Öffnen des Luftregelventils 70 findet eine gezielte Anfettung der Verbrennungskraftmaschine statt, was eine Anhebung der Abgastemperatur bei gleichzeitiger Absenkung des Sauerstoffanteils am Turbinenauslass zur Folge hat. Durch die Einleitung der durch die Verdichtung erwärmten Luft vor den Katalysator wird der Sauerstoffanteil wieder erhöht, so dass eine Erhöhung der Abgastemperatur bei gleich bleibendem Sauerstoffanteil am Katalysator hergestellt werden kann, wodurch eine Umsetzung von HC und CO zu CO₂ ermöglicht wird. Entsprechend können optimale Bedingungen zur Regeneration eingestellt werden. Eine entsprechende Regelung der Luftmassen erfolgt über den Luftmassenmesser 20 und den Massenstromsensor 68.

Es entsteht die Möglichkeit einer unabhängigen Regelung von Ladedruck und Luftmassenstrom, da eine Steigerung des Spülgefälles zur Erhöhung der zurückgeführten Abgasmasse bei Öffnen des Luftregelventils 70 entsteht, da zur Beibehaltung des Drucks in der Luftansaugleitung 12 das Waste-Gate-Ventil 54 angestellt werden muss, was einen Anstieg des Abgasdrucks vor der Turbine 48 zur Folge hat. So kann ohne die Verwendung einer Drosselklappe oder einer Abgasklappe die zurückgeführte Abgasmasse bei gleicher Stellung des Abgasrückführventils 42 erhöht werden.

In Kaltstartphasen kann die Luft durch Schalten der Umschaltklappe 76 über die zweite Verbindungsleitung 72 hinter den Katalysator 56 und den Dieselpartikelfilter 58 geleitet werden, um eine schnelle Temperaturerhöhung zu erreichen. Zusätzlich bestände ein großes Spülgefälle bereits bei Schwachlast und geringem Ladedruck zwischen dem Verdichterauslass 28 und der Abgaseinleitung 14.

Aus alledem folgt, dass mit geringem Bauteileaufwand und minimiertem erforderlichen Bauraum eine vollständige Regelung einer Verbrennungskraftmaschine in allen notwendigen Betriebszuständen ermöglicht wird. Dabei sind sowohl eine schnellere Aufheizung als auch eine Sicherstellung von Regenerationsphasen und eine unabhängige Regelung der angesaugten Luftmasse und des Ladeluftdrucks erreichbar.

Es sollte deutlich sein, dass der Schutzbereich nicht auf das beschriebene Ausführungsbeispiel beschränkt ist. Gegebenenfalls kann beispielsweise auf die zweite Verbindungsleitung verzichtet werden. Auch können die konstruktive Ausführung und die Kopplung des Luftregelventils und des Schubumluftventils selbstverständlich auf andere Art und Weise erfolgen. Auch eine zusätzliche voneinander abhängige Regelung der beiden Ventile ist darstellbar.

## Patentansprüche

1. Verbrennungskraftmaschine mit
einem Motorblock (10),
einer Luftansaugleitung (12), die von einem Lufteinlass (16) zum Motorblock (10) führt,
einer Abgasleitung (14), die vom Motorblock (10) zu einem Abgasauslass (60) führt,
einem Abgasturbolader (26), dessen Verdichter (24) in der Luftansaugleitung (12) angeordnet ist und dessen Turbine (48) in der Abgasleitung (14) angeordnet ist,
einer Schubumluftleitung (30), in der ein Schubumluftventil (32) angeordnet ist,
einer ersten Verbindungsleitung (66), über welche ein Auslass (28) des Verdichters (24) mit der Abgasleitung (14) verbunden ist,
einem Luftregelventil (70), welches in der Verbindungsleitung (66) angeordnet ist,
einem Oxidationskatalysator (56) und einem Partikelfilter (58), die in der Abgasleitung (14) angeordnet sind,
**dadurch gekennzeichnet, dass**
das Luftregelventil (70) und das Schubumluftventil (32) über einen gemeinsamen Aktor (78) regelbar sind.

2. Verbrennungskraftmaschine nach Anspruch 1,
**dadurch gekennzeichnet, dass**
die erste Verbindungsleitung (66) von der Schubumluftleitung (30) abzweigt.

3. Verbrennungskraftmaschine nach einem der Ansprüche 1 oder 2,
**dadurch gekennzeichnet, dass**
die erste Verbindungsleitung (66) stromaufwärts des Partikelfilters (58) in die Abgasleitung (14) mündet.

4. Verbrennungskraftmaschine nach einem der vorhergehenden Ansprüche,
**dadurch gekennzeichnet, dass**
die erste Verbindungsleitung (66) stromaufwärts des Oxidationskatalysators (56) in die Abgasleitung (14) mündet.

5. Verbrennungskraftmaschine nach einem der vorhergehenden Ansprüche,
**dadurch gekennzeichnet, dass**
in der ersten Verbindungsleitung (66) ein Massenstromsensor (68) angeordnet ist.

6. Verbrennungskraftmaschine nach einem der vorhergehenden Ansprüche,
**dadurch gekennzeichnet, dass**
von der ersten Verbindungsleitung (66) eine zweite Verbindungsleitung (72) abzweigt, die stromabwärts des Partikelfilters (58) in die Abgasleitung (14) mündet.

7. Verbrennungskraftmaschine nach Anspruch 6,
**dadurch gekennzeichnet, dass**
in der Abzweigung (74) der zweiten Verbindungsleitung (72) eine Umschaltklappe (76) angeordnet ist, über die wahlweise die erste Verbindungsleitung (66) oder die zweite Verbindungsleitung (72) verschlossen ist.

8. Verbrennungskraftmaschine nach einem der vorhergehenden Ansprüche,
**dadurch gekennzeichnet, dass**
die Schubumluftleitung (30) vor einem Ladeluftkühler (34) von der Luftansaugleitung (12) abzweigt.

9. Verbrennungskraftmaschine nach einem der vorhergehenden Ansprüche,
**dadurch gekennzeichnet, dass**
das Schubumluftventil (32) mit dem Luftregelventil (70) als 3/2-Wegeventil (80) ausgebildet ist.

10. Verbrennungskraftmaschine nach einem der vorhergehenden Ansprüche,
**dadurch gekennzeichnet, dass**
das Schubumluftventil (32) bei geschlossenem Luftregelventil (70) regelbar ist und das Luftregelventil (70) bei geschlossenem Schubumluftventil (32) regelbar ist.

11. Verbrennungskraftmaschine nach einem der vorhergehenden Ansprüche,
**dadurch gekennzeichnet, dass**
das Schubumluftventil (32) und das Luftregelventil (70) als Klappenventile ausgeführt sind, die eine gemeinsame Drehachse (86) aufweisen.

12. Verbrennungskraftmaschine nach einem der Ansprüche 10 oder 11,
**dadurch gekennzeichnet, dass**
die Regelung des Schubumluftventils (32) und des Luftregelventils (70) über einen elektrischen Aktor (78) mit nachfolgendem Getriebe (96) erfolgt, wobei das Getriebe (96) eine Kulisse (100) aufweist, in die ein erster mit dem Schubumluftventil (32) zur Betätigung gekoppelter Bolzen (102) greift und ein zweiter mit dem Luftregelventil (70) zur Betätigung gekoppelter Bolzen (104) greift, wobei in einer Mittelstellung der Kulisse (100) die beiden Bolzen (102, 104) gegen die entgegengesetzten Enden der Kulisse (100) anliegen und das Schubumluftventil (32) die Schubumluftleitung (30) und das Luftregelventil (70) die Verbindungsleitung (66) verschließen.

## Claims

1. Internal combustion engines having
an engine block (10),
an air intake duct (12) which leads from an air inlet (16) to the engine block (10),
an exhaust-gas duct (14) which leads from the engine block (10) to an exhaust-gas outlet (60),
an exhaust-gas turbocharger (26), the compressor (24) of which is arranged in the air intake duct (12) and the turbine (48) of which is arranged in the exhaust-gas duct (14),
an divert-air duct (30), in which a divert-air valve (32) is arranged,
a first connecting duct (66), via which an outlet (28) of the compressor (24) is connected to the exhaust-gas duct (14),
an air regulating valve (70) which is arranged in the connecting duct (66), an oxidation catalytic converter (56) and a particulate filter (58), which are arranged in the exhaust-gas duct (14),
**characterized in that**
the air regulating valve (70) and the divert-air valve (32) can be regulated via a common actuator (78).

2. Internal combustion engine of claim 1, **characterized in that** the first connecting duct (66) branches from the divert-air duct (30).

3. Internal combustion engine of one of claims 1 or 2, **characterized in that** the first connecting duct (66) opens into the exhaust gas duct (14) upstream of the particulate filter (56).

4. Internal combustion engine of one of the preceding claims, **characterized in that** the first connecting duct (66) opens into the exhaust gas duct (14) upstream of the oxidation catalytic converter (56).

5. Internal combustion engine of one of the preceding claims, **characterized in that** a mass flow sensor (68) is arranged in the first connecting duct (66).

6. Internal combustion engine of one of the preceding claims, **characterized in that** a second connecting duct (72) branches from the first connecting duct (66), which second connecting duct opens into the exhaust gas duct (14) downstream of the particulate filter (58).

7. Internal combustion engine of claim 6, **characterized in that** a changeover flap (76) is arranged in the branch (74) of the second connecting duct (72), via which the first connecting duct (66) or the second connecting duct (72) is selectively closed.

8. Internal combustion engine of one of the preceding claims, **characterized in that** the divert-air duct (30) branches from the air intake duct (12) upstream of an intercooler (34).

9. Internal combustion engine of one of the preceding claims, **characterized in that** the divert-air valve (32) is designed as a 3/2-way valve (80) together with the air regulating valve (70).

10. Internal combustion engine of one of the preceding claims, **characterized in that** the divert-air valve (32) is adapted to be controlled when the air regulating valve (70) is closed, and the air regulating valve (70) is adapted to be controlled when the divert-air valve (32) is closed.

11. Internal combustion engine of one of the preceding claims, **characterized in that** the divert-air valve (32) and the air regulating valve (70) are designed as flap valves having a common rotary axis.

12. Internal combustion engine of one of claims 10 or 11, **characterized in that** the divert-air valve (32) and the air regulating valve (70) are controlled via an electric actuator (78) having a downstream transmission (96), the transmission (96) having a slotted link (100) which is engaged by first bolt (102) coupled with the divert-air valve (32) for actuation and by a second bolt (104) coupled with the air regulating valve (70) for actuation, wherein in an intermediate position of the slotted link (100) the two bolts (102, 104) rest against the opposite ends of the slotted link (100) and the divert-air valve (32) closes the divert-air duct (30) and the air regulating valve (70) closes the connecting duct (66).

## Revendications

1. Moteur à combustion interne avec
un bloc-cylindres (10),
une conduite d'aspiration d'air (12) menant à partir d'une entrée d'air (16) au bloc-cylindres (10),
une conduite des gaz d'échappement (14) menant à partir du bloc-cylindres (10) à la sortie des gaz d'échappement (60),
un turbocompresseur à gaz d'échappement (26) dont le compresseur (24) est disposé dans la conduite d'aspiration d'air (12) et dont la turbine (48) est disposée dans la conduite des gaz d'échappement (14),
une conduite de dérivation d'air (30) dans laquelle est disposée une vanne de dérivation d'air (32),
une première conduite de jonction (66) par laquelle une sortie (28) du compresseur (24) est reliée à la conduite des gaz d'échappement (14),
une vanne de régulation d'air (70) disposée dans la conduite de jonction (66),
un catalyseur d'oxydation (56) et un filtre à particules (58) disposés dans la conduite des gaz d'échappement (14),
**caractérisé en ce que**
ladite vanne de régulation d'air (70) et la vanne de dérivation d'air (32) sont réglables par un actionneur (78) commun.

2. Moteur à combustion interne selon la revendication 1, **caractérisé en ce que** la première conduite de jonction (66) est ramifiée à partir de la conduite de dérivation d'air (30).

3. Moteur à combustion interne selon l'une quelconque des revendications 1 ou 2, **caractérisé en ce que** la première conduite de jonction (66) s'ouvre dans la conduite des gaz d'échappement (14) en amont du filtre à particules (58).

4. Moteur à combustion interne selon l'une quelconque des revendications précédentes, **caractérisé en ce que** la première conduite de jonction (66) s'ouvre dans la conduite des gaz d'échappement (14) en amont du catalyseur d'oxydation (56).

5. Moteur à combustion interne selon l'une quelconque des revendications précédentes, **caractérisé en ce qu'**un capteur de flux massique (68) est disposé dans la première conduite de jonction (66).

6. Moteur à combustion interne selon l'une quelconque des revendications précédentes, **caractérisé en ce qu'**une deuxième conduite de jonction (72) est ramifiée à partir de la première conduite de jonction (66), la deuxième conduite s'ouvrant dans la conduite des gaz d'échappement (14) en aval du filtre à particules (58).

7. Moteur à combustion interne selon la revendication 6, **caractérisé en ce qu'**une clapet de commutation (76) est disposée dans l'embranchement (74) de la deuxième conduite de jonction (72), la première conduite de jonction (66) ou la deuxième conduite de jonction (72) étant fermée sélectivement par ladite clapet.

8. Moteur à combustion interne selon l'une quelconque des revendications précédentes, **caractérisé en ce que** la conduite de dérivation d'air (30) est ramifiée à partir de la conduite d'aspiration d'air (12) en amont d'un intercooler (34).

9. Moteur à combustion interne selon l'une quelconque des revendications précédentes, **caractérisé en ce que** la vanne de dérivation d'air (32) et la vanne de régulation d'air (70) sont conjointement réalisées sous la forme d'une vanne à 3/2 voies (80).

10. Moteur à combustion interne selon l'une quelconque des revendications précédentes, **caractérisé en ce que** la vanne de dérivation d'air (32) peut être réglée lorsque la vanne de régulation d'air (70) est fermée, et la vanne de régulation d'air (70) peut être réglée lorsque la vanne de dérivation d'air (32) est fermée.

11. Moteur à combustion interne selon l'une quelconque des revendications précédentes, **caractérisé en ce que** la vanne de dérivation d'air (32) et la vanne de régulation d'air (70) sont réalisées comme vannes á clapet ayant un axe de rotation (66) commun.

12. Moteur à combustion interne selon l'une quelconque des revendications 10 ou 11, **caractérisé en ce que** la régulation de la vanne de dérivation d'air (32) et la vanne de régulation d'air (70) est effectuée par un actionneur électrique (78) avec une transmission (96) en aval, ladite transmission (96) comprenant une coulisse (100) engagée par un premier goujon (102) couplé avec la vanne de dérivation d'air (32) pour l'actionnement de celle-ci, et par un deuxième goujon (104) couplé avec la vanne de régulation d'air (70) pour l'actionnement de celle-ci, où les deux goujons (102, 104), dans une position intermédiaire de la coulisse (100), restent contre les extrémités opposées de la coulisse (100) et la vanne de dérivation d'air (32) ferme la conduite de dérivation d'air (30) et la vanne de régulation d'air (70) ferme la conduite de jonction (66).
